# EUROPÄISCHE PATENTANMELDUNG

(11) **EP 1 338 634 A1**
(43) Veröffentlichungstag der Anmeldung: **27.08.2003**
(21) Anmeldenummer: 02028772.8
(22) Anmeldetag: 23.12.2002
(51) Int. Cl.: C09D 175/04, C08G 18/08, C08G 18/12, C08G 18/66, C08G 18/38

(54) **Oberflächenschutz für lackierte Flächen**

(30) Priorität: 02.02.2002 AT 92002
(71) Anmelder: Surface Specialties Austria GmbH, 8402 Werndorf (AT)
(72) Erfinder: Schafheutle, Markus, Dr., 8044 Graz (AT); Burkl, Julius, 8053 Graz (AT)
(74) Vertreter: Deckers, Hellmuth, Dr.

(57) **Zusammenfassung**

Wäßrige Dispersion, enthaltend ein hochmolekulares Polyurethan A sowie Additive B, wobei die Polyurethane einen zahlenmittlere molare Masse von mindestens 10 kg/mol und eine gewichtsmittlere molare Masse von mindestens 20 kg/mol aufweisen, und die Additive B Mercaptangruppen, Hydrazidgruppen und/oder N-Alkylamidgruppen aufweisen, deren Herstellung und deren Verwendung als Oberflächenschutzbeschichtung insbesondere für Kraftfahrzeuge

## Beschreibung

Die Erfindung betrifft einen Oberflächenschutz für lackierte Flächen sowie ein Verfahren zu dessen Applikation.

Kraftfahrzeuge werden nach ihrer Produktion mit einem Oberflächenschutz versehen, der den Lack des Kraftfahrzeuges bis zur Auslieferung beim Kunden gegen aggressive Umwelteinflüsse schützen soll. Insbesondere bei Kraftfahrzeugen, die ohne Kundenbestellung auf Vorrat produziert werden, ist eine Standzeit bis zur Auslieferung bis zu mehreren Monaten möglich, so daß hier der Oberflächenschutz unumgänglich ist. Ein solcher Oberflächenschutz wird üblicherweise nur auf den Lack und nicht auf die Scheiben aufgetragen, wobei insbesondere die im wesentlichen horizontalen Flächen des Kraftfahrzeuges zu schützen sind. Die Scheiben werden freigehalten, damit das Kraftfahrzeug fahrbereit bleibt, um beispielsweise verladen oder zur Vervollständigung seiner Einrichtung (Anbauteile) in die Produktion zurückgefahren zu werden.

Üblicherweise kommen hierfür Wachskonservierungen zur Anwendung, die jedoch den Einsatz eines Lösungsmittels erforderlich machen. Eine Alternative hierzu ist eine Schutzfolie, die jedoch neben ihren verhältnismäßig hohen Materialkosten aufwendig von Hand aufzubringen ist, so daß die Gesamtkosten des Oberflächenschutzes erheblich sind.

Zum temporären Schutz von neu hergestellten und frisch lackierten Kraftfahrzeugen ist es von besonderer Bedeutung, daß der Oberflächenschutz weder die Lackschicht während der Applikation oder kurz danach angreift, noch durch übermäßige Haftung entweder nicht oder nur mit unverhältnismäßigem Kraftaufwand entfernbar ist oder beim Entfernen die Lackschicht zerstört.

Aufgabe der vorliegenden Erfindung ist es daher, einen Oberflächenschutz für unlackierte und lackierte Flächen, insbesondere für Kraftfahrzeuge bereitzustellen, der schnell aufzubringen und leicht sowie ohne Beschädigung des Substrats wieder zu entfernen ist und ohne erhebliche Mengen an Lösungsmittel auskommt.

Diese Aufgabe wird gelöst durch eine wäßrige Dispersion von speziellen hochmolekularen Polyurethanen mit speziellen Additiven.

Gegenstand der vorliegenden Erfindung ist daher eine wäßrige Dispersion, enthaltend ein hochmolekulares Polyurethan **A** sowie Additive **B** ausgewählt aus Mercaptanen, Hydraziden, und N-Alkylamiden.

Besonders geeignete derartige Additive **B** enthalten zwei der genannten reaktiven Gruppen, also zwei Gruppen ausgewählt aus Hydrazidgruppen, Mercaptangruppen und N-Alkylamid-Gruppen. Bevorzugt ist es dabei, daß ein einem Molekül zwei gleichartige reaktive Gruppen vorhanden sind, also Dihydrazide, Dimercaptane und Bis-(N-alkylamide).

Die hochmolekularen Polyurethane **A** haben eine zahlenmittlere molare Masse Mₙ (gemessen durch Gelpermeationschromatographie, Eichung mit Polystyrol-Standards) von mindestens 10 kg/mol, bevorzugt mindestens 15, und besonders bevorzugt mindestens 20 kg/mol, und eine gewichtsmittlere molare Masse M_{w} von mindestens 20 kg/mol, bevorzugt mindestens 30, und besonders bevorzugt mindestens 40 kg/mol. Die Säurezahl der Polyurethane A, gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen), beträgt bevorzugt 20 bis 50 mg/g, insbesondere 25 bis 45 mg/g.

Das Polyurethan **A** enthält Bausteine abgeleitet von Polyisocyanaten **AA**, Polyolen **AB** mit einer zahlenmittleren molaren Masse Mₙ von mindestens 400 g/mol, gegebenenfalls niedermolekularen Polyolen **AC** mit Mₙ unter 400 g/mol, Verbindungen **AD,** die mindestens zwei gegenüber Isocyanatgruppen reaktive Gruppen und mindestens eine zur Anionenbildung befähigte Gruppe aufweisen, niedermolekularen Polyolen **AE**, die gegenüber Isocyanatgruppen keine weiteren reaktiven Gruppen tragen, Verbindungen **AF**, die gegenüber Isocyanaten monofunktionell sind oder aktiven Wasserstoff unterschiedlicher Reaktivität enthalten und von den Verbindungen **AE** verschieden sind, sowie gegebenenfalls Verbindungen **AG**, die von **AB, AC, AD, AE** und **AF** verschieden sind und mindestens zwei mit NCO-Gruppen reaktive Gruppen enthalten.

Bevorzugt ist das Polyurethan frei von Carbonylgruppen, die aus Keton- oder Aldehyd-Funktionalitäten stammen. Ebenfalls bevorzugt ist, daß das Polyurethan **A** einen Massenanteil von weniger als 5 %, bevorzugt weniger als 2 %, und insbesondere weniger als 1 % von Vinylpolymeren als Bestandteile enthält. Insbesondere ist bevorzugt, daß das Polyurethan **A** frei von derartigen Vinyl-Bestandteilen ist.

Besonders gute Resultate werden erhalten, wenn die zahlenmittlere molare Masse des Polyurethanharzes **A** mindestens 25 kg/mol beträgt.

Die hochmolekularen, in Wasser dispergierbarer Polyurethanharze werden hergestellt durch die folgenden Schritte
- Synthese eines Isocyanat-funktionellen Präpolymeren durch Umsetzung von Polyisocyanaten **AA** mit Polyolen **AB** mit einer zahlenmittleren molaren Masse Mₙ von mindestens 400, gegebenenfalls niedermolekularen Polyolen **AC** und Verbindungen **AD**, die mindestens zwei gegenüber Isocyanatgruppen reaktive Gruppen und mindestens eine zur Anionenbildung befähigte Gruppe aufweisen, zu einem freie NCO-Gruppen enthaltenden Präpolymeren, das einen Staudinger-Index ***J***₀ von mindestens 20 cm³/g, bevorzugt mindestens 23 cm³/g, und besonders bevorzugt mindestens 26 cm³/g aufweist,
- zumindest teilweise Neutralisation der zur Anionenbildung befähigten Gruppe der Verbindung **AD** unter Bildung von anionischen Gruppen, Dispergierung dieses Präpolymeren in Wasser und
- Umsetzung des neutralisierten Präpolymeren mit mindestens einer der Komponenten ausgewählt aus niedermolekularen Polyolen **AE**, die gegenüber Isocyanatgruppen keine weiteren reaktiven Gruppen tragen, wobei diese Verbindungen im Überschuß eingesetzt werden, Verbindungen **AF,** die gegenüber Isocyanaten monofunktionell sind oder aktiven Wasserstoff unterschiedlicher Reaktivität enthalten und von den Verbindungen **AE** verschieden sind, sowie gegebenenfalls Verbindungen **AG,** die von **AB, AC, AD, AE** und **AF** verschieden sind und mindestens zwei mit NCO-Gruppen reaktive Gruppen enthalten.

Der Staudinger-Index des im Schritt 1 gebildeten Präpolymeren, gemessen in N-Methylpyrrolidon/Chloroform als Lösungsmittel kann insbesondere noch höhere Werte als die oben genannten aufweisen, besonders gute Eigenschaften insbesondere bezüglich der Antrocknungsgeschwindigkeit des damit formulierten Oberflächenschutzlacks werden nämlich erhalten, wenn ***J***₀ mindestens 30 cm³/g, bevorzugt mindestens 33 cm³/g und insbesondere mindestens 35 cm³/g beträgt. Die früher so bezeichnete "Grenzviskositätszahl", nach DIN 1342, Teil 2.4, "Staudinger-Index" ***J***₀ genannt, ist der Grenzwert der Staudinger-Funktion ***J***ᵥ bei abnehmender Konzentration und Schubspannung, wobei ***J***ᵥ die auf die Massenkonzentration *β*_{B}=***m*** _{B} / ***V*** des gelösten Stoffes B (mit der Masse ***m*** _{B} des Stoffes im Volumen ***V*** der Lösung) bezogene relative Viskositätsänderung ist, also ***J***ᵥ = (ηᵣ - 1) / β_{B}. Dabei bedeutet ηᵣ - 1 die relative Viskositätsänderung, gemäß ηᵣ - 1 = (ηlain - ηₛ) / ηₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für ***J*** verwendete Einheit ist "cm³/g"; häufig auch "ml/g" oder "dl/g".

Die Polyisocyanate **AA** sind mindestens difunktionell und können ausgewählt werden aus aromatischen und aliphatischen linearen, cyclischen oder verzweigten Isocyanaten, insbesondere Diisocyanaten. Werden aromatische Isocyanate eingesetzt, so müssen diese in Mischung mit den genannten aliphatischen Isocyanaten verwendet werden. Dabei ist der Anteil der aromatischen Isocyanate so zu wählen, daß die Anzahl der durch diese in die Mischung eingeführten Isocyanatgruppen zumindest 5 % geringer ist als die Anzahl der nach der ersten Stufe verbleibenden Isocyanatgruppen in dem erzeugten Präpolymer. Bevorzugt werden Diisocyanate, wobei bis zu 5 % von deren Masse durch trifunktionelle oder höherfunktionelle Isocyanate ersetzt werden kann.

Die Diisocyanate besitzen vorzugsweise die Formel Q(NCO)₂, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendüsocyanat, 1,4-Diisocyanatocyclohexan, 3-Isocyanatomethyl-3,5,5-trimethylcyclohexylisocyanat (Isophorondiisocyanat, IPDI), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), p-Xylylendiisocyanat und α, α, α',α'-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-A 29 28 552 verwiesen.

Geeignet sind auch "Lackpolyisocyanate" auf Basis von Hexamethylendiisocyanat oder von 1-Isocyanato-3,3,5-trimethyl-4-isocyanatomethyl-cyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung bei Bedarf in bekannter Weise, vorzugsweise durch Destillation von überschüssigem Ausgangsdiisocyanat bis auf einen restlichen Massenanteil von weniger als 0,5 % befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-A 4 324 879 erhalten werden können, und die im wesentlichen auf N,N,N-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphanen entstehen. Besonders bevorzugt sind die zuletzt genannten Gemische einer Viskosität bei 23 °C von 50 bis 20 000 mPa·s und einer zwischen 2,0 und 5,0 liegenden NCO-Funktionalität.

Bei den erfindungsgemäß ebenfalls geeigneten, jedoch bevorzugt in Mischung mit den vorgenannten aliphatischen Polyisocyanaten einzusetzenden aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und eventuell anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die eventuell im Anschluß an ihre Herstellung vorzugsweise destillativ von überschüssigen monomeren Diisocyanaten befreit worden sind. In den Mischungen von aromatischen und (cyclo-)aliphatischen Isocyanaten werden die Mengen dieser beiden Komponenten so gewählt, daß sichergestellt ist, daß die Isocyanatgruppen des Präpolymeren ausschließlich oder mindestens zu 90 % (cyclo-) aliphatisch gebunden sind.

Die Polyisocyanatkomponente **AA** kann im übrigen aus beliebigen Gemischen der beispielhaft genannten Polyisocyanate bestehen.

Der Massenanteil an von den Polyisocyanaten **AA** abgeleiteten Bausteinen in dem Polyurethanharz liegt in der Regel bei ca. 10 bis 50 %, vorzugsweise 20 bis 35 %, bezogen auf die Masse des Polyurethanharzes.

Die Polyole **AB** besitzen vorzugsweise eine zahlenmittlere molare Masse Mₙ von 400 bis 5000 g/mol, insbesondere 800 bis 2000 g/mol. Ihre Hydroxylzahl beträgt im allgemeinen 30 bis 280, vorzugsweise 40 bis 200 und insbesondere 50 bis 160 mg/g. Bevorzugt werden ausschließlich difunktionelle Polyole **AB** eingesetzt; bis zu 5 % der Masse der Polyole **AB** kann jedoch auch durch drei- oder höherwertige Polyole ersetzt werden.

Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Beispiele für derartige Polyole, bei denen es sich um die aus der Polyurethanchemie bekannten Verbindungen handelt, sind Polyätherpolyole, Polyesterpolyole, Polycarbonatpolyole, Polyesteramidpolyole, Polyamidoamidpolyole, Epoxidharzpolyole und deren Umsetzungsprodukte mit CO₂, Polyacrylatpolyole und dergleichen. Derartige Polyole, die auch in Mischung eingesetzt werden können, sind beispielsweise in den DE-Offenlegungsschriften 20 20 905, 23 14 513 und 31 24 784 sowie in der EP-A 0 120 466 beschrieben. Es ist gleichfalls möglich, Ricinusöl als Polyolkomponente einzusetzen.

Von diesen Polyolen sind die Polyäther- und Polyesterpolyole bevorzugt, insbesondere solche, die nur endständige OH-Gruppen aufweisen und eine Funktionalität von kleiner als 3, vorzugsweise von 2,8 bis 2 und insbesondere von 2 besitzen.

Als Polyätherpolyole sind hier beispielsweise Polyoxyäthylenpolyole, Polyoxypropylenpolyole, Polyoxybutylenpolyole zu nennen und vorzugsweise Polytetrahydrofurane mit endständigen OH-Gruppen.

Die erfindungsgemäß besonders bevorzugten Polyesterpolyole sind die bekannten Polykondensate aus organischen Di- sowie gegebenenfalls Poly- (Tri-, Tetra-) Hydroxyverbindungen und Di- sowie gegebenenfalls Poly- (Tri-, Tetra-) Carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Äthylenglykol, 1,2-Butandiol, Diäthylenglykol, Triäthylenglykol, Polyalkylenglykole, wie Polyäthylenglykol, weiterhin 1,2- und 1,3-Propandiol, 1,4-Butandiol, 1,6-Hexandiol, Neopentylglykol oder Hydroxypivalinsäureneopentylglykolester. Als gegebenenfalls mit einzusetzende Polyole mit drei oder mehr Hydroxylgruppen im Molekül sind hier beispielsweise Trimethylolpropan, Trimethyloläthan, Glycerin, Erythrit, Pentaerythrit, Ditrimethylolpropan, Dipentaerythrit, Trimethylolbenzol oder Trishydroxyäthylisocyanurat zu nennen.

Als Dicarbonsäuren geeignet sind aromatische und cycloaliphatische Dicarbonsäuren, lineare und verzweigte Alkyl- und Alkenyl-Dicarbonsäuren sowie Dimerfettsäuren. Es kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Bernsteinsäure, Azelainsäure, Sebacinsäure, Glutarsäure, "Chlorendic"-Säure, Tetrachlorphthalsäure, Maleinsäure, Fumarsäure, Itaconsäure, Malonsäure, Korksäure, 2-Methylbernsteinsäure, 3,3-Diäthylglutarsäure, 2,2-Dimethylbernsteinsäure, Octenylbernsteinsäure und Dodecenylbernsteinsäure. Anhydride dieser Säuren sind ebenfalls brauchbar, soweit sie existieren. Die Anhydride werden hier durch den Ausdruck "Säure" mit umfaßt. Es können auch untergeordnete Mengen (Stoffmengenanteil bis zu 10 %, bezogen auf die Stoffmenge aller Säuren) von Monocarbonsäuren, wie Benzoesäure und Hexancarbonsäure verwendet werden. Gesättigte aliphatische oder aromatische Säuren sind bevorzugt, wie Adipinsäure oder Isophthalsäure. Als gegebenenfalls in kleineren Mengen mitzuverwendende Polycarbonsäuren seien hier Trimellithsäure, Trimesinsäure, Pyromellithsäure sowie Polyanhydride, wie in DE 28 11 913 beschrieben, oder Mischungen zweier oder mehrerer solcher Verbindungen genannt.

Die Hydroxycarbonsäuren, die als Reaktionsteilnehmer bei der Herstellung eines Polyesterpolyols mit endständigen Hydroxylgruppen verwendet werden können, sind beispielsweise Hydroxycapronsäure, Hydroxybuttersäure, Hydroxydecansäure, Hydroxystearinsäure. Brauchbare Lactone, die bei der Synthese der Polyesterpolyole eingesetzt werden können, sind unter anderen Caprolacton, Butyrolacton und Valerolacton.

Der Massenanteil an von der Komponente **AB** abgeleiteten Bausteinen in dem Polyurethanharz liegt üblicherweise zwischen 15 und 80 %, vorzugsweise zwischen 40 und 60 %, bezogen auf die Masse des Polyurethanharzes.

Die gegebenenfalls zum Aufbau der Polyurethanharze eingesetzten niedermolekularen Polyole **AC** bewirken in der Regel eine Versteifung der Polymerkette. Sie besitzen im allgemeinen eine molare Masse von etwa 60 bis 400 g/mol, vorzugsweise 60 bis 200 g/mol und Hydroxylzahlen von 200 bis 1500 mg/g. Sie können aliphatische, alicyclische oder aromatische Gruppen enthalten. Ihr Massenanteil, soweit sie eingesetzt werden, liegt im allgemeinen bei 0,5 bis 20, vorzugsweise 1 bis 10 %, bezogen auf die Masse der Hydroxylgruppen-haltigen Komponenten **AB** bis **AD**. Geeignet sind beispielsweise die niedermolekularen Polyole mit bis zu etwa 20 Kohlenstoffatomen je Molekül, z.B. Äthylenglykol, Diäthylenglykol, 1,2-Propandiol, 1,3-Propandiol, 1,4-Butandiol, 1,2- und 1,3-Butylenglykol, 1,2- und 1,4-Cyclohexandiol, 1,4-Cyclohexandimethanol, 1,6-Hexandiol, Bisphenol A (2,2-Bis(4-hydroxyphenyl)propan), hydriertes Bisphenol A (2,2-Bis(4-hydroxycyclohexyl)propan) sowie deren Mischungen, sowie als Triole Trimethyloläthan und -propan. Bevorzugt werden ausschließlich oder zumindest überwiegend (in der Regel mehr als 90 % der Masse, bevorzugt mehr als 95 %) Diole eingesetzt.

Werden bei den Verbindungen **AA, AB,** und/oder **AC** trifunktionelle oder höherfunktionelle Verbindungen eingesetzt, so ist darauf zu achten, daß beim Aufbau des Präpolymeren keine Vergelung eintritt, Dies kann beispielsweise dadurch verhindert werden, daß monofunktionelle Verbindungen gemeinsam mit den tri- oder höherfunktionellen Verbindungen eingesetzt werden, wobei die Menge der monofunktionellen Verbindungen dann vorzugsweise so zu wählen ist, daß die mittlere Funktionalität der betreffenden Komponente 2,3, bevorzugt 2,2, und insbesondere 2,1 nicht übersteigt.

Die anionogenen Verbindungen **AD** enthalten mindestens eine, bevorzugt mindestens zwei mit Isocyanaten reaktive gruppen wie Hydroxyl-, Amino- und Mercaptan-Gruppen und mindestens eine Säuregruppe, die bei zumindest teilweiser Neutralisation in wäßriger Lösung oder Dispersion Anionen bildet. Solche Verbindungen sind beispielsweise in den US-Patentschriften 34 12 054 und 36 40 924 sowie in den DE-Offenlegungsschriften 26 24 442 und 27 44 544 beschrieben, auf die hier Bezug genommen wird. Insbesondere kommen hierfür solche Polyole, vorzugsweise Diole, in Frage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen oder Phosphonsäuregruppen geeignet. Beispiele für Verbindungen **AD** sind insbesondere Dihydroxycarbonsäuren, wie α,α-Dialkylolalkansäuren, insbesondere α,α-Dimethylolalkansäuren wie 2,2-Dimethylolessigsäure, 2,2-Dimethylolpropionsäure, 2,2-Dimethylolbuttersäure, 2,2-Dimethylolpentansäure und die isomeren Weinsäuren, weiterhin Polyhydroxysäuren wie Glukonsäure. Besonders bevorzugt ist dabei 2,2-Dimethylolpropionsäure. Aminogruppenhaltige Verbindungen **AD** sind beispielsweise 2,5-Diaminovaleriansäure (Ornithin) und 2,4-Diaminotoluolsulfonsäure-(5). Es können auch Gemische der genannten Verbindungen **AD** zum Einsatz kommen. Der Massenanteil der von der Komponente **AD** abgeleiteten Bausteine in dem Polyurethanharz liegt im allgemeinen bei 2 bis 20, vorzugsweise bei 4 bis 10 %, bezogen auf die Masse des Polyurethanharzes.

Die Verbindungen **AE** befinden sich überwiegend, vorzugsweise zu 70 bis 90 %, jeweils an den Kettenenden der Moleküle und schließen diese ab (Kettenstopper). Sie sind ebenfalls niedermolekular (Mₙ wie bei den Polyolen **AC**). Geeignete Polyole besitzen mindestens drei, vorzugsweise 3 oder 4 Hydroxylgruppen im Molekül. Genannt seien hier beispielsweise Glycerin, Hexantriol, Pentaerythrit, Dipentaerythrit, Diglycerin, Trimethyloläthan und Trimethylolpropan, wobei letzteres bevorzugt ist. Als Kettenstopper wird die Komponente **AE** im Überschuß eingesetzt, also in einer solchen Menge, daß die Anzahl der Hydroxylgruppen in der eingesetzten Menge der Komponente **AE** die der noch vorhandenen Isocyanatgruppen im Präpolymeren aus **AA, AB, AC** und **AD** übersteigt. Der Massenanteil an von der Komponénte **AE** abgeleiteten Bausteine im Polyurethanharz liegt üblicherweise zwischen 2 und 15, vorzugsweise 5 bis 15 %, bezogen auf die Masse des Polyurethanharzes. Gegebenenfalls finden sich die von der Komponente **AE** abgeleiteten Bausteine in Mischung mit den Bausteinen abgeleitet von **AF** und/oder **AG** im Polyurethanharz.

Die Verbindungen **AF** sind monofunktionelle, mit NCO-Gruppen reaktive Verbindungen, wie Monoamine, insbesondere mono-sekundäre Amine, oder Monoalkohole. Genannt seien hier beispielsweise: Methylamin, Äthylamin, n-Propylamin, n-Butylamin, n-Octylamin, Laurylamin, Stearylamin, Isononyloxypropylamin, Dimethylamin, Diäthylamin, Di-n- und Di-isopropylamin, Din-butylamin, N-Methylaminopropylamin, Diäthyl- und Dimethyl-aminopropylamin, Morpholin, Piperidin, bzw. geeignet substituierte Derivate davon, Amidoamine aus diprimären Aminen und Monocarbonsäuren, sowie Monoketimine von diprimären Aminen, und primär/tertiäre Amine, wie N,N-Dimethylaminopropylamin.

Vorzugsweise kommen für **AF** auch Verbindungen in Betracht, die aktiven Wasserstoff mit gegenüber NCO-Gruppen unterschiedlicher Reaktivität enthalten, insbesondere Verbindungen, die neben einer primären Aminogruppe auch sekundäre Aminogruppen, oder neben einer OH-Gruppe auch COOH-Gruppen oder neben einer Aminogruppe (primär oder sekundär) auch OH-Gruppen aufweisen, wobei die letzteren besonders bevorzugt sind. Beispiele hierfür sind: primäre/sekundäre Amine, wie 3-Amino-1-methylaminopropan, 3-Amino-1-äthylaminopropan, 3-Amino-1-cyclohexylaminopropan, 3-Amino-1-methylaminobutan; Mono-Hydroxycarbonsäuren, wie Hydroxyessigsäure, Milchsäure oder Äpfelsäure, weiterhin Alkanolamine wie N-Aminoäthyläthanolamin, Äthanolamin, 3-Aminopropanol, Neopentanolamin und besonders bevorzugt Diäthanolamin.

Auf diese Weise können, ebenso wie der Verwendung der Verbindungen **AE**, zusätzliche funktionelle Gruppen in das polymere Endprodukt eingebracht und dieses damit reaktionsfähiger gegenüber Materialien, wie Härtern, gemacht werden, falls dies gewünscht ist. Der Massenanteil an von der Komponente **F** abgeleiteten Bausteine in dem Polyurethanharz liegt üblicherweise zwischen 2 und 20, vorzugsweise 3 und 10 %, bezogen auf die Masse des Polyurethanharzes.

Die Verbindungen **G** sind die sogenannten Kettenverlängerer. Als solche kommen die hierfür bekannten, mit NCO-Gruppen reaktiven und vorzugsweise difunktionellen Verbindungen in Frage, die nicht identisch mit **B, C, D, E** und **F** sind und zumeist zahlenmittlere molare Massen bis zu 400 g/mol aufweisen. Genannt seien hier beispielsweise Wasser, Hydrazin, Dihydrazide von Dicarbonsäuren wie Adipinsäuredihydrazid, Diamine wie Äthylendiamin, 1,3-Diaminopropan, 1,4-Diaminobutan, Hexamethylendiamin, wobei die Amine auch Substituenten, wie OH-Gruppen, tragen können. Solche Polyamine sind beispielsweise in der DE-Offenlegungsschrift 36 44 371 beschrieben. Der Massenanteil an von der Komponente **G** abgeleiteten Bausteine in dem Polyurethanharz liegt üblicherweise zwischen 1 und 10, vorzugsweise 2 und 5 %, bezogen auf die Masse des Polyurethanharzes.

Die Additive **B** bewirken überraschenderweise, daß der beim Verdunsten des Dispergiermittels Wasser zurückbleibende Lackfilm ohne großen Kraftaufwand durch Abreißen zu lösen ist. Werden diese Additive bei ansonsten gleicher Rezeptur weggelassen, so wurde gefunden, daß der Oberflächenschutzfilm nicht mehr entfernbar ist.

Geeignete Additive **B** sind insbesondere Hydrazide von Monocarbonsäuren ausgewählt aus linearen, verzweigten und cyclischen Alkansäuren sowie aromatischen Monocarbonsäuren und Dihydrazide von Alkandisäuren und aromatischen Dicarbonsäuren mit jeweils 2 bis 40 Kohlenstoffatomen, Alkyl-Mercaptane und Dimercaptoalkane mit 2 bis 20 Kohlenstoffatomen im Alkyl-bzw. Alkylenrest, sowie N-Alkylamide von linearen, verzweigten und cyclischen Alkansäuren sowie aromatischen Monocarbonsäuren und Bis-N-Alkylamide von Alkandisäuren und aromatischen Dicarbonsäuren mit jeweils 2 bis 40 Kohlenstoffatomen im Säurerest und 1 bis 6, bevorzugt 1 bis 4 Kohlenstoffatomen im N-Alkylrest. Insbesondere geeignet sind die Dihydrazide von Bernsteinsäure, Glutarsäure, Adipinsäure, Pimelinsäure, Phthalsäure, Isophthalsäure und Terephthalsäure, N-Methylacetamid, N-Methylpropionsäureamid, und die Bis-(N-Methylamide) von Oxalsäure, Bernsteinsäure, Glutarsäure, Adipinsäure, Pimelinsäure, Phthalsäure, Isophthalsäure und Terephthalsäure.

Die Erfindung betrifft auch ein Verfahren zum Schutz der Oberfläche von Metallen oder lackierten Flächen durch Aufbringen einer Schicht der erfindungsgemäßen wäßrigen Dispersion auf ein Substrat. Zum Aufbringen des erfindungsgemäßen Oberflächenschutzes wird insbesondere eine lackierte Karosserie, insbesondere ein Kraftfahrzeug, das vollständig oder zumindest äußerlich weitgehend vollständig fertiggestellt ist, mit der wäßrigen Dispersion enthaltend das Polyurethan A und das Additiv **B** behandelt, wobei insbesondere im wesentlichen die horizontalen Flächen mit der Dispersion benetzt werden. Die Dispersion verfestigt sich auf der lackierten Karosserie, d. h. zumindest ein Teil der Dispersion bleibt als fester filmartiger Überzug zurück, wobei ein anderer Teil der Dispersion (im wesentlichen das Wasser) verdunsten kann.

Das Aufbringen der Dispersion auf das Kraftfahrzeug erfolgt üblicherweise durch Sprühen, kann aber auch durch Streichen erfolgen. Beim Sprühen wird die Sprüheinrichtung vorzugsweise derart auf das Kraftfahrzeug ausgerichtet, daß die Scheiben des Kraftfahrzeuges überwiegend nicht besprüht werden. Auch an den überwiegend vertikalen Flächen des Kraftfahrzeuges kann der Auftrag der Dispersion eingeschränkt bis garnicht erfolgen. Der Auftrag der Dispersion erfolgt vorteilhaft derart, daß die resultierende Schicht im wesentlichen eine Schichtstärke im Bereich von 10 µm bis 1000 µm, insbesondere 20 µm bis 500 mm und besonders vorteilhaft 20 µm bis 100 mm aufweist. Nach dem Abziehen von der zu schützenden Oberfläche kann der Film der üblichen Kunststoffverwertung zugeführt werden.

Mit der Erfindung wird eine umweltverträglichere (lösungsmittelfreie) Konservierung von Kraftfahrzeugen erreicht, wobei die Konservierung kaltwasserbeständig (regenfest) ist, eine gute Lackverträglichkeit zeigt, eine ausreichende Haftung besitzt (sich nicht durch den Fahrtwind beim Transport löst), über mehrere Monate (insbesondere 2 bis 12) stabil ist und leicht entfernt werden kann. Außerdem verursacht der erfindungsgemäße Oberflächenschutz niedrige Fertigungskosten und benötigt nur kurze Fertigungszeiten.

Die nachfolgenden Beispiele veranschaulichen die Erfindung.

### Beispiel 1 (Herstellung eines Polyester-diols):

132 g Adipinsäure, 72 g Isophthalsäure, 142 g 1,6-Hexandiol und 42 g Neopentylglykol wurden in einem 1L-Glasrundkolben vorgelegt und unter Abdestillieren des Reaktionswassers langsam auf 250° C erhitzt. Bei dieser Temperatur wurde so lange gehalten, bis die Säurezahl unter 10 mg/g gefallen war. Dann wurde unter vermindertem Druck weiterkondensiert, bis die Säurezahl unter 2 mg/g fiel. Man erhielt ein klaren Polyester mit einer Hydroxylzahl von 75 bis 80 mg/g.

### Beispiel 2 (lösungsmittelfreie PU-Dispersion; hohe Temperatur):

213 g des Polyesters aus Beispiel 1, 1,3 g Äthylenglykol, 26,8 g Dimethylolpropionsäure und 8,3 g Neopentylglykol wurden in 150 g Methylisobutylketon bei ca. 60 °C gemischt. Zu dieser Mischung wurden 119 g Isophorondiisocyanat gegeben, die Mischung wurde auf 100 bis 120 °C erhitzt. Bei dieser Temperatur wurde so lange gehalten, bis ein Staudinger-Index ("Grenzviskosität") von 28 bis 30 cm³/g erreicht war (nach ca. 4,5 h). Dann wurde die Lösung auf 95 °C gekühlt und mit 12,6 g Triäthylamin versetzt. Nach einer Homogenisierung wurde mit 808 g entionisiertem Wasser mit einer Temperatur von ca. 80 °C dispergiert. Sofort danach wurde eine Lösung aus 3,1 g Äthylendiamin in 100 g entionisiertem Wasser zugegeben. Nach einer Haltezeit von 30 min bei 80 °C wurden unter leicht vermindertem Druck 337 g eines Gemisches aus Methylisobutylketon und Wasser abdestilliert. Nach dem Abkühlen erhielt man eine feinteilige Dispersion mit einem nicht flüchtigen Anteil (Festkörper-Massenanteil) von 34 %, einer Viskosität von 500 bis 1000 mPa·s und einem pH-Wert von ca. 8,1.

### Beispiel 3 (lösungsmittelfreie verzweigte PU-Dispersion; hohe Temperatur):

213 g des Polyesters aus Beispiel 1, 1,3 g Äthylenglykol, 26,8 g Dimethylolpropionsäure und 8,3 g Neopentylglykol wurden in 150 g Methylisobutylketon bei ca. 60 °C gemischt. Zu dieser Mischung wurden 119 g Isophorondiisocyanat gegeben und die Mischung wurde auf 100 bis 120 °C erhitzt. Bei dieser Temperatur wurde so lange gehalten, bis ein Staudinger-Index ("Grenzviskosität") von 28 bis 30 cm³/g erreicht war (nach ca. 4,5 h). Dann wurde die Lösung auf 95 °C gekühlt und mit 12,6 g Triäthylamin versetzt. Nach Homogenisierung wurde mit 808 g entionisiertem Wasser mit einer Temperatur von ca. 80 °C dispergiert. Sofort danach wurde eine Lösung aus 3,8 g Triäthylentetramin in 100 g entionisiertem Wasser zugegeben. Nach einer Haltezeit von 30 min bei 80 °C wurde unter leicht vermindertem Druck 337 g eines Gemisches aus Methylisobutylketon und Wasser abdestilliert. Nach dem Abkühlen erhielt man eine feinteilige Dispersion mit einem Festkörper-Massenanteil (nicht flüchtigen Anteil) von 34 %, einer Viskosität von 500 bis 1000 mPa·s und einem pH-Wert von ca. 8,1.

### Beispiel 4: (lösungsmittelfreie verzweigte PU-Dispersion; niedrige Temperatur):

Es wurden in einem 2L-Glaskolben 302,3 g Polybutadiendiol (®PolyBD R45HT, ElfAtochem) vorgelegt und in 340 g Methyläthylketon (MEK) gelöst. Zu dieser Mischung wurden 9,5 g Triäthylamin und 17,9 g Dimethylolpropionsäure zugegeben und gelöst. Dabei wurde die Mischung auf 70 °C erwärmt. Bei dieser Temperatur wurde in die klare Lösung 89,9 g Isophorondiisocyanat zugegeben. Dabei erwärmte sich die Mischung auf 80 °C. Diese Temperatur wurde so lange gehalten, bis der Staudinger-Index ("Grenzviskosität") des Polyurethans 24,5 cm³/g erreicht hatte. Nachdem dieser Wert erreicht war, wurde die Harzlösung mit 708 g zuvor auf 80 °C erwärmtem Wasser innerhalb von 5 bis 10 min dispergiert. Während der Dispergierung wurde damit begonnen, das entstehende Azeotrop MEK / Wasser abzudestillieren. Gleich nach Ende der Wasserzugabe wurde innerhalb von 5 min eine Lösung, bestehend aus 6,8 g Äthylendiamin in 60 g Wasser zudosiert. Dabei trat eine Wärmetönung auf, die Temperatur stieg um ca. 3 bis 4 °C an, wodurch die Destillation des Azeotrops stark gefördert wurde. Die Destillation wurde danach unter gelindem Zuheizen so lange fortgesetzt, bis insgesamt 340 g MEK und 360 g Wasser abdestilliert waren. Nach dem Abkühlen auf Raumtemperatur erhielt man eine weißlich opake Dispersion mit einem Festkörper-Massenanteil von 50% und einer Viskosität von ca. 500 bis 1000 mPa·s. Der pH-Wert dieser Dispersion lag bei ca. 7,5.

### Beispiel 5: Oberflächenschutzlack-Formulierungen mit Adipinsäuredihydrazid (ADH) als Additiv

Mit den Polyurethanen aus den Beispielen 2 bis 4 wurden Oberflächenschutzlacke hergestellt. Die Rezeptur des Oberflächenschutzlacks mit dem erfindungsgemäßen Additiv war gemäß der nachfolgenden Tabelle 1:

**Tabelle 1:**

| Massen der Komponenten in g | |
|---|---|
| 68,00 | PU-Dispersionen aus Beisp. 2 bis 4 eingestellt auf einen nichtflüchtigen Anteil von 35% |
| 5,00 | ®Additol VXW 6200/10%ig Wasser |
| 1,00 | ®Additol VXW 6208 |
| 0,50 | ®Byk 346 |
| 7,50 | Wasser |
| 1,00 | Entschäumer DNE |
| 16,60 | ®Kronos 2310 |
| 0,40 | ADH |
| 100,00 | |

- Entschäumer DNE:: Gemisch aus Fettsäureestern und Paraffinen mit Carboxylaten; Fa. Bayer AG, Leverkusen
- Additol VXW 6200:: anionisches polymeres Dispergier-Additiv, Solutia Austria GmbH
- Additol VXW 6208:: nichtionisches polymeres Dispergieradditiv, Solutia Austria GmbH
- Kronos 2310:: Titandioxid-Pigment
- Byk 346: Silicontensid, polyäthermodifiziertes Polydimethylsoiloxan, Byk-Chemie GmbH, Wesel

Die Herstellung erfolgte in einer Perlmühle; es wurde ein Festkörper-Massenanteil im Lack von ca. 40 % erreicht, das Verhältnis der Massen von Bindemittel und Pigment betrug 1:0,7

### Beispiel 6: Oberflächenschutzlack-Formulierungen ohne Adipinsäuredihydrazid (ADH)

Mit den Polyurethanen aus den Beispielen 2 bis 4 wurden Oberflächenschutzlacke hergestellt. Die Rezeptur des Oberflächenschutzlacks ohne das erfindungsgemäße Additiv war gemäß der nachfolgenden Tabelle 2:

**Tabelle 2:**

| Massen der Komponenten in g | |
|---|---|
| 68,00 | PU-Dispersionen aus Beisp. 2 bis 4 eingestellt auf einen nichtflüchtigen Anteil von 35% |
| 5,00 | ®Additol VXW 6200/10%ig Wasser |
| 1,00 | ®Additol VXW 6208 |
| 0,50 | ®Byk 346 |
| 7,90 | Wasser |
| 1,00 | Entschäumer DNE |
| 16,60 | Kronos 2310 |
| 100,00 | |

Die Herstellung erfolgte in einer Perlmühle; es wurde ein Festkörp er-Massenanteil im Lack von ca. 40 % erreicht, das Verhältnis der Massen von Bindemittel und Pigment betrug 1:0,7

### Beispiel 7: Prüfergebnisse

Die Lacke nach Beispielen 5 und 6 wurden auf eine Automobilkarosse mit einem frisch aufgetragenen und bei 80 °C während 30 Minuten gehärteten 2K-Isocyanat-härtenden Acrylklarlack 20 Minuten nach dem Verlassen des Ofens durch Spritzen aufgetragen. Der Lack-Aufbau wurde anschließend 3 Std. bei 80 °C gehärtet und getempert. Getestet wurde nach einer weiteren Ruhezeit von 16 Std. bei Raumtemperatur. Die Prüfergebnisse sind in der Tabelle 3 zusammengefaßt.

**Tabelle 3:**

| Prüfergebnisse | | | | |
|---|---|---|---|---|
| PU-Dispersionen nach | Einreißfestigkeit# | Abziehbarkeit⁺ | Feuchtwarm-beständigkeit * | Lösungsmittelbeständigkeit^{&} |
| Beisp. 2 u. 5 | 1 | 5 | 1 | 4 |
| Beisp. 2 u. 6 | 1 | 1 | 1 | 4 |
| Beisp. 3 u. 5 | 2 | 5 | 2 | 2 |
| Beisp. 3 u. 6 | 2 | 1 | 2 | 2 |
| Beisp. 4 u. 5 | 5 | 5 | 1 | 1 |
| Beisp. 4 u. 6 | 5 | 1 | 1 | 1 |

| | | | | |
|---|---|---|---|---|
| # Bewertung wie unten | | | | |
| + Auf Klarlack gemäß der Beschreibung | | | | |
| * nach 10 d Lagerung bei 40 °C und 100 % rel. Luftfeuchtigkeit | | | | |
| & gemessen bei Lagerung in einem Gemisch von Isopropanol:Wasser 1:1; 30 min bei 40 °C Bewertung: 1=sehr gut, 5=schlecht | | | | |

## Patentansprüche

1. Wäßrige Dispersion, enthaltend ein hochmolekulares Polyurethan **A** sowie Additive **B**, **dadurch gekennzeichnet, daß** die Polyurethane einen zahlenmittlere molare Masse von mindestens 10 kg/mol und eine gewichtsmittlere molare Masse von mindestens 20 kg/mol aufweisen, und daß die Additive **B** Mercaptangruppen, Hydrazidgruppen und/oder N-Alkylamidgruppen aufweisen.

2. Wäßrige Dispersion nach Anspruch 1, **dadurch gekennzeichnet, daß** die Polyurethane **A** eine Säurezahl von 20 bis 50 mg/g aufweisen.

3. Wäßrige Dispersion nach Anspruch 1, **dadurch gekennzeichnet, daß** die Polyurethane **A** Bausteine enthalten abgeleitet von Polyisocyanaten **AA,** Polyolen **AB** mit einer zahlenmittleren molaren Masse Mₙ von mindestens 400 g/mol, gegebenenfalls niedermolekularen Polyolen **AC** mit Mₙ unter 400 g/mol, Verbindungen **AD,** die mindestens zwei gegenüber Isocyanatgruppen reaktive Gruppen und mindestens eine zur Anionenbildung befähigte Gruppe aufweisen, niedermolekularen Polyolen **AE**, die gegenüber Isocyanatgruppen keine weiteren reaktiven Gruppen tragen, Verbindungen **AF**, die gegenüber Isocyanaten monofunktionell sind oder aktiven Wasserstoff unterschiedlicher Reaktivität enthalten und von den Verbindungen **AE** verschieden sind, sowie gegebenenfalls Verbindungen **AG**, die von **AB, AC, AD, AE** und **AF** verschieden sind und mindestens zwei mit NCO-Gruppen reaktive Gruppen enthalten.

4. Wäßrige Dispersion nach Anspruch 1, **dadurch gekennzeichnet, daß** die Additive **B** Hydrazide von Monocarbonsäuren oder Dihydrazide von Dicarbonsäuren sind mit jeweils 2 bis 40 Kohlenstoffatomen.

5. Wäßrige Dispersion nach Anspruch 1, **dadurch gekennzeichnet, daß** die Additive **B** N-Alkylamide von Monocarbonsäuren oder Bis-(N-Alkylamide) von Dicarbonsäuren sind mit jeweils 2 bis 40 Kohlenstoffatomen im Säurerest und 1 bis 6 Kohlenstoffatomen im N-Alkylrest.

6. Wäßrige Dispersion nach Anspruch 1, **dadurch gekennzeichnet, daß** als Additiv **B** Adipinsäuredihydrazid verwendet wird.

7. Wäßrige Dispersion nach Anspruch 1, **dadurch gekennzeichnet, daß** als Additiv **B** N-Methylacetamid verwendet wird.

8. Verfahren zur Herstellung von wäßrigen Dispersion nach Anspruch 1, **dadurch gekennzeichnet, daß** in einem ersten Schritt
- ein Isocyanat-funktionelles Präpolymer hergestellt wird durch Umsetzung von Polyisocyanaten **AA** mit Polyolen **AB** mit einer zahlenmittleren molaren Masse Mₙ von mindestens 400, gegebenenfalls niedermolekularen Polyolen **AC** und Verbindungen **AD,** die mindestens zwei gegenüber Isocyanatgruppen reaktive Gruppen und mindestens eine zur Anionenbildung befähigte Gruppe aufweisen, zu einem freie NCO-Gruppen enthaltenden Präpolymeren, das einen Staudinger-Index ***J***₀ von mindestens 20 cm³/g, bevorzugt mindestens 23 cm³/g, und besonders bevorzugt mindestens 26 cm³/g aufweist,
- in einem zweiten Schritt zumindest teilweise Neutralisation erfolgt der zur Anionenbildung befähigten Gruppe der Verbindung **AD** unter Bildung von anionischen Gruppen, Dispergierung dieses Präpolymeren in Wasser und
- in einem dritten Schritt die Umsetzung des neutralisierten Präpolymeren erfolgt mit mindestens einer der Komponenten ausgewählt aus niedermolekularen Polyolen **AE**, die gegenüber Isocyanatgruppen keine weiteren reaktiven Gruppen tragen, wobei diese Verbindungen im Überschuß eingesetzt werden, Verbindungen AF, die gegenüber Isocyanaten monofunktionell sind oder aktiven Wasserstoff unterschiedlicher Reaktivität enthalten und von den Verbindungen **AE** verschieden sind, sowie gegebenenfalls Verbindungen **AG,** die von **AB, AC, AD, AE** und **AF** verschieden sind und mindestens zwei mit NCO-Gruppen reaktive Gruppen enthalten.

9. Verwendung der wäßrigen Dispersion gemäß Anspruch 1 zur Herstellung von Oberflächenschutzbeschichtungen auf lackierten un nicht lackierten Metallen.

10. Verwendung der wäßrigen Dispersion nach Anspruch 1 zur Herstellung von Oberflächenschutzbeschichtungen auf Automobilen, insbesondere auf mit Klarlacken beschichteten Automobilen.
